**Europäisches Patentamt**

**European Patent Office**

**Office européen des brevets**

(19)

(11) Veröffentlichungsnummer: **0 111 618**
**A2**

(12) # EUROPÄISCHE PATENTANMELDUNG

(21) Anmeldenummer: **83101578.9**

(22) Anmeldetag: **18.02.83**

(51) Int. Cl.³: **G 06 K 7/10**

(30) Priorität: **15.11.82 DE 3242219**

(43) Veröffentlichungstag der Anmeldung:
**27.06.84 Patentblatt 84/26**

(84) Benannte Vertragsstaaten:
**AT BE CH DE FR GB IT LI LU NL SE**

(71) Anmelder: **Erwin Sick GmbH Optik-Elektronik**
**Sebastian-Kneipp-Strasse 1**
**D-7808 Waldkirch(DE)**

(72) Erfinder: **Fetzer, Günter**
**Sonnhalde 97a**
**D-7803 Gundelfingen(DE)**

(72) Erfinder: **Erdmann, Jürgen**
**Eisenbahnstrasse 35**
**D-7808 Waldkirch 3(DE)**

(74) Vertreter: **Dipl.-Phys.Dr. Manitz Dipl.-Ing. Finsterwald**
**Dipl.-Ing. Grämkow Dipl.-Chem.Dr. Heyn**
**Dipl.-Phys.Rotermund Morgan B.Sc.(Phys.)**
**- Robert-Koch-Strasse 1**
**D-8000 München 22(DE)**

(54) **Optisches Markenerkennungsgerät.**

(57) Bei einem optischen Markenerkennungsgerät weist der Lichtsender zwei wahlweise einschaltbare Lichtquellen (11, 12) auf, welche Lichtbündel unterschiedlicher Spektralzusammensetzung aussenden. Ein halbdurchlässiger Spiegel (15) lenkt die Lichtbündel (13, 14) beider Lichtquellen (11, 12) auf einen gemeinsamen optischen Weg (16).

EP 0 111 618 A2

Die Erfindung betrifft ein optisches Markenerkennungsgerät
mit einem Lichtsender, welcher ein Lichtbündel veränderbarer Spektralzusammensetzung zu einem optische Erkennungsmarken tragenden Träger aussendet, und einem Lichtempfänger, welcher das vom Träger bzw. der Marke remittierte Licht
empfängt und auf einen Photoempfänger lenkt, der an eine
elektronische Auswerteschaltung zur Abgabe eines Markenerkennungssignals angeschlossen ist.

Bei/Verpackungs-, Druck- und Folienschweißmaschinen werden
auf das zu verpackende Material aufgedruckte Markierungsmarken (Druckmarken) zur Steuerung und/oder Regelung von
Maschinen benutzt. Ein optisches Markenerkennungsgerät tastet
während der Bewegung des zu verarbeitenden Materials, das den
Markenträger bildet, die aufgebrachten Druckmarken ab, erkennt
also ihr Vorbeilaufen, und gibt ein entsprechendes elektrisches
Signal ab. Das Umsetzen der optischen Information in ein elektrisches Signal geschieht dadurch, daß das vom optischen Markenerkennungsgerät betrachtete Objekt mit einer eingebauten
Lichtquelle beleuchtet wird und die Remissionswerte mit einem
ebenfalls im Taster befindlichen Lichtempfänger gemessen werden. Das elektrische Ausgangssignal des Lichtempfängers wird
mit einem einstellbaren Grenzwert verglichen, der je nach der
vom Lichtempfänger empfangenen Lichtmenge über- oder unterschritten wird. Das Über- oder Unterschreiten dieses Grenzwertes wird durch ein eindeutiges Ja/Nein-Signal am Ausgang
des optischen Markenerkennungsgerätes zur Anzeige gebracht.

Der Kontrast zwischen dem Markenträger und der Druckmarke ist
die eigentliche Eingangsinformation des Markenerkennungsgerätes.
Er wird unter anderem bestimmt von der Farbe und der Farbsättigung der Marke und des Markenträgers sowie vom wirksamen Spektrum des vom Markenerkennungsgerät abgegebenen Lichtbündels.
Der wirksame Spektralbereich wird durch die spektrale Empfindlichkeit des Lichtempfängers und durch das Emissionsspektrum
des Lichtsenders bestimmt.

Da unterschiedliche Farben für Druckmarken und Markenträger
zum Einsatz kommen, wird zur Schaffung eines optimalen Kontrastes bei bekannten Geräten der eingangs genannten Gattung
durch fallweisen Einsatz eines Farbfilters das wirksame Arbeitsspektrum optimiert. Auch sind Markenerkennungsgeräte
bekannt, bei denen auswechselbare Photoempfänger mit unterschiedlicher spektraler Empfindlichkeit zum Einsatz kommen.
Der Nachteil dieser bekannten Geräte ist der umständliche
Austausch des Filters oder des Photoempfängers, da hierzu
das Gehäuse geöffnet werden muß.

Das Ziel der vorliegenden Erfindung besteht nun darin, ein
optisches Markenerkennungsgerät der eingangs genannten Gattung zu schaffen, mit dem der spektrale Arbeitsbereich des
Lichtsenders auf einfache Weise verlagert werden kann, ohne
daß außerhalb oder insbesondere innerhalb des Gerätes irgendwelche Umbau- oder Anbauvorgänge vorgenommen werden müssen.

Zur Lösung dieser Aufgabe sieht die Erfindung vor, daß der
Lichtsender mehrere, insbesondere zwei wahlweise einschaltbare Lichtquellen aufweist, welche Lichtbündel unterschiedlicher Spektralzusammensetzung aussenden, und daß Lichtbündelüberlagerungsmittel die Lichtbündel aller Lichtquellen
auf einen gemeinsamen optischen Weg lenken. Auf diese Weise
kann durch einen einfachen elektrischen Umschalter die jeweils für ein bestimmtes Markenerkennungsproblem optimal geeignete Lichtquelle eingeschaltet werden. Es bedarf also weder irgendeines Eingriffs in das Gerät, noch der Auswechslung
von Filtern oder dergleichen.

Es ist zwar bereits bekannt (Zeitschrift "Laser + Elektro-
Optik" Nr. 6/1973, Seiten 13,14), bei einem optischen Oberflächenüberwachungsgerät wahlweise einen Laser oder eine Hochdrucklampe als Lichtquelle zu verwenden, um entweder Kratzer
in Blechen und Inhomogenität/en in transparenten Folien oder größere
Fehlstellen mit unterschiedlichen Farbverläufen erkennen zu
können. Die unterschiedlichen Lichtquellen werden jedoch durch

- 3 -                                    0111618

Umklappen eines Planspiegels zum Einsatz gebracht. Bei dieser
bekannten Ausführung muß also /für die Präzision des Gerätes
                           ein
wesentliches Bauelement innerhalb des optischen Strahlenganges
mechanisch bewegt werden, was einerseits einen hohen Aufwand
bedeutet und zum anderen Ungenauigkeiten mit sich bringen kann
und zu einer Störanfälligkeit des Gerätes führt. Erfindungsgemäß werden die beiden oder mehreren Lichtbündel dagegen durch
stationär angeordnete Lichtbündelüberlagerungsmittel vereinigt
und lediglich durch einen geeigneten elektrischen Umschalter
zu jeweils unterschiedlichen Zeiten eingeschaltet und wirksam
gemacht.

Die Lichtquellen können unterschiedlich befilterte Glühlampen
sein. Bevorzugt handelt es sich jedoch um unterschiedliche
Spektralbereiche aufweisende Lumineszenzdioden. Ein sehr universeller Anwendungsbereich ist gegeben, wenn bei zwei Lumineszenzdioden die eine im roten und die andere im grünen oder
blauen Spektralbereich emittiert. Hierdurch können Marken im
jeweils komplementären Spektralbereich optimal erkannt werden.

Eine vorteilhafte praktische Ausführungsform kennzeichnet sich
dadurch, daß die beiden Lichtquellen unter einem Winkel von
insbesondere 90$^{o}$ zueinander angeordnet sind und ihre Lichtbündel durch einen Strahlenteilerspiegel auf den gemeinsamen
optischen Weg gelenkt werden. Der Strahlenteiler soll insbesondere ein halbdurchlässiger Spiegel sein. Besonders geringe
Lichtverluste treten dann auf, wenn der Strahlenteiler ein
dichroitischer Spiegel ist, dessen spektrales urchlaß- und
Reflexionsvermögen an die Spektralbereiche der durchzulassenden bzw. zu reflektierenden Lichtbündel angepaßt ist. Z.B.
wird vom dichroitischen Strahlenteilerspiegel der kurzwellige
Anteil reflektiert und der langwellige Anteil durchgelassen.
Ein dichroitischer Spiegel kann so ausgebildet werden, daß
nahezu keine Lichtverluste auftreten.

Sofern das erfindungsgemäße Markenerkennungsgerät mit einem Autokollimationssystem für Lichtsender und -empfänger arbeitet, soll vorgesehen sein, daß der zweite Strahlenteiler des Autokollimationssystems im gemeinsamen optischen Weg der Sendelichtbündel angeordnet ist. In diesem Fall sind also im Sendelichtbündel zwei Teilerspiegel, insbesondere halbdurchlässige Spiegel auf der optischen Achse hintereinander angeordnet.

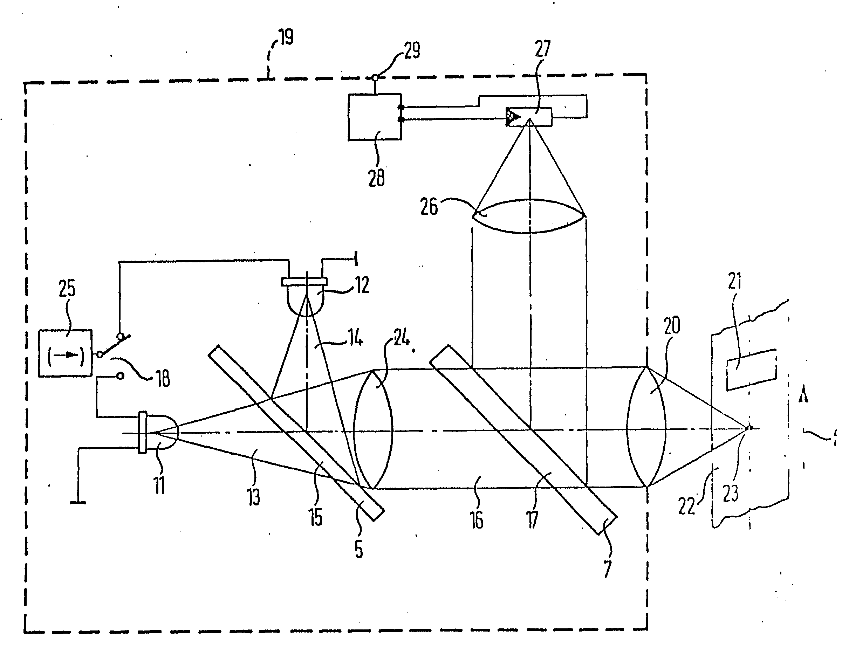

Die Erfindung wird im folgenden beispielsweise anhand der Zeichnung beschrieben, deren einzige Figur eine schematische Darstellung eines optischen Markenerkennungsgerätes zeigt.

Nach der Zeichnung ist das optische Markenerkennungsgerät gemäß der Erfindung in einem Gehäuse 19 angeordnet, welches an einer Seite eine Frontlinse 20 aufweist, die ein entlang eines optischen Weges 16 verlaufendes z.B. paralleles Lichtbündel auf der Oberfläche eines Marken 21 tragenden Markenträgers 22 konzentriert, welcher in Richtung des Pfeiles f relativ zum Gehäuse 19 bewegt wird. Auf diese Weise werden die Marken 21 an dem durch das optische Markenerkennungsgerät erzeugten Lichtpunkt 23 vorbeigeführt.

Das im optischen Weg 16 vorhandene z.B. parallele Sendelichtbündel wird wahlweise durch eine im grünen oder blauen Spektralbereich emittierende Lumineszenzdiode 11 oder eine im roten Spektralbereich emittierende Lumineszenzdiode 12 erzeugt. Die beiden Lumineszenzdioden 11,12 sind unter einem Winkel von 90° im Gehäuse 19 angeordnet. Zwischen ihnen befindet sich ein halbdurchlässiger Spiegel 15, welcher einen Teil des von der Lumineszenzdiode 11 ausgesandten Lichtbündels 13 reflektiert und einen Teil des von der Lumineszenzdiode 12 ausgehenden Lichtbündels 14 hindurchläßt. Für den Fall, daß der halbdurchlässige Spiegel 15 ein dichroitischer Spiegel ist, erfolgt so eine spektrale Zerlegung nach durchgehendem und reflektiertem Licht und es treten hierbei so gut wie keine Lichtverluste auf. Die Anordnung der Lumineszenzdioden 11, 12 und des halbdurchlässigen Spiegels 15 sind derart, daß die beiden durchgelassenen bzw. reflektierten Lichtbündel 13,14 im Anschluß an den halbdurchlässigen Spiegel 15 den gleichen optischen Weg nehmen und durch eine Sammellinse 24 parallelisiert werden. Auf diese Weise wird das in dem optischen Weg 16 vorhandene Sendelichtbündel 16 erzeugt.

Die Lumineszenzdioden 11,12 sind gemeinsam an einen elektrischen Umschalter 18 angelegt, der von einem Netzgerät 25 beaufschlagt ist. Auf diese Weise kann wahlweise die Lumineszenzdiode 11 oder die Lumineszenzdiode 12 eingeschaltet werden.

In dem gemeinsamen optischen Weg 16 befindet sich zwischen der Sammellinse 24 und der Frontlinse 20 ein weiterer Strahlenteiler 17, der parallel zum halbdurchlässigen Spiegel 15 angeordnet ist und ebenfalls als halbdurchlässiger Spiegel ausgebildet sein kann. Die Aufgabe des Strahlenteilers 17 ist es, daß vom Markenträger 22 bzw. der Marke 21 remittiertes und durch die Frontlinse 20 aufgenommenes Licht unter einem Winkel von $90^{\circ}$ zu einer weiteren Sammellinse 26 zu reflektieren, welche das Empfangslicht auf einem Photoempfänger 27 konzentriert, der an eine elektronische Auswerteschaltung 28 angeschlossen ist, die an einen Ausgang 29 ein Ja/Nein-Signal in Abhängigkeit davon abgibt, ob die vor dem Empfänger 27 empfangene Lichtmenge einen bestimmten Pegel über- oder unterschreitet.

Die Arbeitsweise des erfindungsgemäßen Markenerkennungsgerätes ist wie folgt:

Wenn der Träger 22 beispielsweise weiß und die Marke 21 grün oder blau ist, wird mittels des Umschalters 18 die im roten emittierende Lumineszenzdiode 12 eingeschaltet, wodurch vom Träger 22 das auftreffende Licht optimal remittiert wird, von der Marke 21 dagegen praktisch kein Licht. Es liegt also ein optimaler Kontrast vor, welcher für die Erkennung der Marke 21 sehr wichtig ist.

Liegt die Farbe der Marke 21 dagegen im roten Bereich, und ist der Träger 22 nach wie vor weiß, so wird durch den Umschalter 18 die Lumineszenzdiode 11 angeschaltet, wobei sich die Lumineszenzdiode 12 automatisch abschaltet. Auch nunmehr liegt wieder ein optimales Kontrastverhalten vor.

- 1 -

---

Optisches Markenerkennungsgerät

---

Patentansprüche

1. Optisches Markenerkennungsgerät mit einem Lichtsender, welcher ein Lichtbündel veränderbarer Spektralzusammensetzung zu einem optische Erkennungsmarken tragenden Träger aussendet, und einem Lichtempfänger, welcher das vom Träger bzw. der Marke remittierte Licht empfängt und auf einen Photoempfänger lenkt, der an eine elektronische Auswerteschaltung zur Abgabe eines Markenerkennungssignals angeschlossen ist, dadurch g e k e n n z e i c h n e t , daß der Lichtsender mehrere, insbesondere zwei wahlweise einschaltbare Lichtquellen (11,12) aufweist, welche Lichtbündel unterschiedlicher Spektralzusammensetzung aussenden, und daß Lichtbündelüberlagerungsmittel (15) die Lichtbündel (13, 14) aller Lichtquellen (11,12) auf einen gemeinsamen optischen Weg (16) lenken.

2. Markenerkennungsgerät nach Anspruch 1, dadurch g e k e n n - z e i c h n e t , daß die Lichtquellen unterschiedlich befilterte Glühlampen sind.

3. Markenerkennungsgerät nach Anspruch 1, dadurch g e k e n n - z e i c h n e t , daß die Lichtquellen unterschiedliche Spektralbereiche aufweisende Lumineszenzdioden (11,12) sind.

4. Markenerkennungsgerät nach Anspruch 3, dadurch g e k e n n - z e i c h n e t , daß bei zwei Lumineszenzdioden (11,12) die eine im roten und die andere im grünen oder blauen Spektralbereich emittiert.

5. Markenerkennungsgerät nach einem der vorhergehenden Ansprüche, dadurch g e k e n n z e i c h n e t , daß die beiden Lichtquellen (11,12) unter einem Winkel von insbesondere 90° zueinander angeordnet sind und ihre Lichtbündel (13,14) durch einen Strahlenteilerspiegel (15) auf den gemeinsamen optischen Weg (16) gelenkt werden.

6. Markenerkennungsgerät nach Anspruch 5, dadurch g e k e n n - z e i c h n e t , daß der Strahlenteiler (15) ein halbdurchlässiger Spiegel ist.

7. Markenerkennungsgerät nach Anspruch 5 oder 6, dadurch g e k e n n z e i c h n e t , daß der Strahlenteiler (15) ein dichroitischer Spiegel (15) ist, dessen spektrales Durchlaß- und Reflexionsvermögen an die Spektralbereiche der durchzulassenden bzw. zu reflektierenden Lichtbündel (12 bzw. 13) angepaßt ist.

8. Markenerkennungsgerät nach einem der vorhergehenden Ansprüche mit einem Autokollimationssystem für Lichtsender und -empfänger, dadurch g e k e n n z e i c h n e t , daß der zweite Strahlenteiler (17) des Autokollimationssystems im gemeinsamen optischen Weg (16) der Sendelichtbündel (13,14) angeordnet ist.

9. Markenerkennungsgerät nach einem der vorhergehenden Ansprüche, dadurch g e k e n n z e i c h n e t , daß die beiden Lichtquellen (11,12) über einen elektrischen Umschalter (18) von der gleichen Spannungsquelle beaufschlagt sind.